# EUROPÄISCHE PATENTSCHRIFT

(11) **EP 1 686 356 B1**
(45) Veröffentlichungstag und Bekanntmachung des Hinweises auf die Patenterteilung: **07.12.2011**
(21) Anmeldenummer: 05109509.9
(22) Anmeldetag: 22.07.2003
(51) Int. Cl.: G01L 1/22, G01B 7/16, G01G 3/14

(54) **Feuchtigkeitsschutz für einen elektromechanischen Wandler**
Moisture protection for an electromechanical transducer
Protection contre l'humidité pour un transducteur électromécanique

(30) Priorität: 25.07.2002 EP 02102061
(43) Veröffentlichungstag der Anmeldung: 02.08.2006
(62) Teilanmeldung aus: 03771117.3
(73) Patentinhaber: Mettler-Toledo AG, 8606 Greifensee (CH)
(72) Erfinder: Ziebart, Volker, 8418 Schlatt (CH); Tellenbach, Jean-Maurice, 8442 Hettlingen (CH)

(56) Entgegenhaltungen:
- EP-A- 0 107 966
- EP-A- 0 610 831
- SU-A- 1 709 724
- US-A- 5 289 722
- US-A- 5 631 622
- PATENT ABSTRACTS OF JAPAN Bd. 1995, Nr. 08, 29. September 1995 (1995-09-29) -& JP 07 113697 A (TEC CORP), 2. Mai 1995 (1995-05-02)
- PATENT ABSTRACTS OF JAPAN Bd. 013, Nr. 520 (P-963), 21. November 1989 (1989-11-21) -& JP 01 212327 A (ISHIDA SCALES MFG CO LTD), 25. August 1989 (1989-08-25)

## Beschreibung

Die Erfindung betrifft eine Reihen- oder Flächenanordnung von Dehnmessstreifen, mit einer dehnungsempfindlichen auf einem Träger aufgebrachten elektrischen Widerstandsbahn, mit einer die Widerstandsbahn und mindestens einen Teil des Trägers bedeckenden Mehrlagenschicht. Ferner betrifft die Erfindung ein Verfahren zur Herstellung einer Mehrlagenschicht auf einer Reihen- oder Flächenanordnung von Dehnmessstreifen.

Ein Dehnmessstreifen weist eine auf einem Träger aufgebrachte metallische Widerstandsbahn auf, welche vorzugsweise in Form einer Mäanderstruktur mittels bekanntem Ätzverfahren hergestellt wird. Femer sind auf dem Träger Anschlusselektroden zur Kontaktierung der Widerstandsbahn vorhanden, wobei diese häufig in einem Arbeitsgang mit der Widerstandsbahn entstehen und somit meist aus demselben Material bestehen. Als Trägermaterial für Dehnmessstreifen werden elektrische Isolatoren verwendet; je nach Anwendungsbereich findet man Glas, Keramik, häufig auch Polymere, glasfaserverstärkte Polymere oder Kompositmaterialien. Dehnmessstreifen sind Messelemente, bei welchen eine mechanische Verformung eine Änderung des elektrischen Widerstandes hervorruft, und welche daher zur Messung der die Verformung bewirkenden Kraft benutzt werden.

In der Wägetechnologie, beispielsweise, werden Dehnmessstreifen zur Wandlung einer durch eine Kraft auf einen Verformungskörper bewirkten Verformung in ein elektrisches Signal verwendet. In einer solchen Kraftmesszelle entsteht eine Auslenkung des vertikal beweglichen Lastaufnehmers gegenüber dem räumlich feststehenden Teil des Verformungskörpers durch die Kraftwirkung einer Last auf der mit dem Lastaufnehmer verbundenen Waagschale. In einer bevorzugten Ausbildungsform weisen solche Verformungskörper vier durch dünne Materialbereiche geformte, elastische Biegestellen auf, welche jeweils an den vier Eckpunkten eines Parallelogramms angeordnet sind, wobei der Lastaufnehmer als vertikal beweglicher Parallelogrammschenkel gegenüber einem vorzugsweise am Waagengehäuse befestigten, ebenfalls vertikalen Parallelogrammschenkel angeordnet ist. Die Grösse der in den dünnen Biegestellen hervorgerufenen Verformung wird mit mindestens einem auf einer der Biegestellen, meist mittels einer elektrisch isolierenden Klebeschicht aufgebrachten Dehnmessstreifen als Änderung seines elektrischen Widerstands gemessen.

Aufgrund ihrer elastischen Eigenschaften werden in der Wägetechnologie bevorzugt polymere Trägermaterialien, insbesondere Polyimide, aber auch Epoxide, Phenolharze, Melamine und Ketone für Dehnmessstreifen verwendet. Polymere Träger haben den Vorteil, dass sie sich aufgrund ihrer geringeren Steifigkeit dem Verformungskörper besser anpassen. Insbesondere wird dadurch die mechanische Belastung der Klebeschicht reduziert. Hystereseeffekte oder eine Zerstörung der einen starren Träger mit einem Verformungskörper verbindenden Klebeschicht treten hier weitaus weniger auf. Zusätzlich ermöglichen polymere Trägermaterialien bei Dehnmessstreifen mit einer mäanderförmig ausgebildeten Widerstandsbahn bekanntermassen eine Lastdriftkompensation durch eine entsprechende Ausbildung der Umkehrstellen der Widerstandsbahn. Im Übrigen sind Dehnmessstreifen mit polymeren Trägem besser handhabbar und preisgünstiger herzustellen.

Polymere besitzen jedoch den Nachteil, dass sie eine relativ hohe Aufnahmefähigkeit für Wasser, aber auch für Lösungsmittel aufweisen, so dass der Feuchtigkeitsgehalt der eine Kraftmesszelle umgebenden Luft, insbesondere aber dessen Änderungen, einen nachhaltigen Einfluss auf das Messresultat hat. Beispielsweise sind die Empfindlichkeit, die Stabilität des Nullpunkts und das Kriechverhalten, die sogenannte Lastdrift, von der Feuchtigkeit - betreffend Wasser und Lösungsmitteln - beeinflusste Parameter einer mit Dehnmessstreifen als Wandler beaufschlagten Kraftmesszelle. Für die Grössenordnung der durch Änderung dieser Parameter verursachten Änderungen des Wägeresultats wurden einige zehn bis einige hundert parts-permillion (ppm) des Vollausschlages (Signal bei Volllast) im Falle einer stufenförmigen Änderung des Feuchtigkeitsgehalts der eine Kraftmesszelle umgebenden Luft von ca. 30% relativer Feuchtigkeit (rF) auf 85% rF im typischen Temperaturbereich zwischen 10°C und 40°C gemessen.

Einige dieser zu Änderungen der Messresultate führenden Ursachen sind erkannt und physikalisch erklärbar. Zum Ersten nimmt das Trägermaterial eines ungeschützten Dehnmessstreifens die Feuchtigkeit auf und quillt dadurch auf, so dass sich der Abstand der Widerstandsbahn zur Biegestelle vergrössert und dadurch die von der sich verformenden Biegestelle in die Widerstandsbahn induzierte Verformung geringfügig verändert wird. Zum Zweiten ändert aufgenommene Feuchtigkeit die elastischen Eigenschaften des Trägermaterials und damit die Verformungsparameter der Widerstandsbahn. Zum Dritten kann eine erhöhte Feuchtigkeit des Trägermaterials Leckströme zwischen benachbarten Bereichen einer mäanderförmigen Widerstandsbahn, oder gar zwischen der Widerstandsbahn und dem metallischen Verformungskörper hervorrufen. Diese Effekte sind zwar relativ zum Vollausschlag klein, wie oben genannte Messwerte zeigen, jedoch für eine Kraftmesszelle, die höchsten Genauigkeitsanforderungen zu genügen hat, ist ihr Einfluss auf das Messsignal noch zu gross. Daher sind Schutzvorrichtungen und/oder Schutzmassnahmen erforderlich, um ein von Umgebungseinflüssen, insbesondere von auf das Trägermaterial und/oder die Widerstandsbahn einwirkender Feuchtigkeit, weitgehend unbeeinflusstes Messsignal zu erhalten.

Im Stand der Technik sind solche Massnahmen zum Schutz von Dehnmessstreifen vor eine Veränderung des Messsignals bewirkender Feuchtigkeit bekannt. So beschreibt die DE 27 28 916 A1 die Bedeckung eines auf einem Messgrössenaufnehmer aufgebrachten Dehnmessstreifens. Zunächst wird eine elektrisch isolierende Schicht, beispielsweise ein Harz aufgebracht, beziehungsweise der Dehnmessstreifen wird in diese Schicht eingebettet, so dass auch ein Teil des Aufnehmerkörpers um den Dehnmessstreifen abgedeckt wird. Auf die elektrisch isolierende Schicht wird eine Metallschicht angeordnet, die ebenfalls einen Teil des Aufnehmerkörpers um den Dehnmessstreifen abdeckt. Somit kann eine Kapselung gegen Feuchtigkeit für einen bereits auf einem Aufnehmer aufgebrachten Dehnmessstreifen erreicht werden.

Aus der US 5 631 622 ist eine Schutzmassnahme gegen Feuchtigkeit für Dehnmessstreifen bekannt, bei der anschliessend an deren Herstellung in einer Flächenanordnung, noch vor der Vereinzelung der Dehnmessstreifen, zunächst eine elektrisch isolierende Polymerschicht auf die Dehnmessstreifen aufgebracht wird und darauf eine Metallfolie als zusätzliche Abdeckung laminiert wird. Auch nach der Vereinzelung ist ein Dehnmessstreifen grossflächig durch die Metallfolie gegen Feuchtigkeitseinwirkung geschützt.

Die EP 0 610 831 A2 beschreibt ein Beschichtungsmaterial und ein Verfahren zur Herstellung funktioneller Beschichtungen mit organofunktionellen Silanen einer Metallverbindung. Ein solches Material ist gut verarbeitbar, weist eine gute Haftung und eine hohe Beständigkeit auf.

In der EP 0 107 966 A2 wird ein Klebestreifen beschrieben, welcher ein Polymersubstrat mit darauf aufgebrachter Aluminiumschicht aufweist, wobei ausserdem eine Klebeschicht aufgebracht ist. Mittels letzterer wird der Klebestreifen auf einen an einer Kraftmesszelle applizierten Dehnmessstreifen zum Schutz desselben vor eindringender Feuchtigkeit aufgeklebt. Zusätzlich sind die elektrischen Verbindungsstellen des Dehnmessstreifens mit einer Kapton-Folie bedeckt.

Die JP 01 212327 A offenbart die Herstellung von mehreren Verformungskörpern aus einer Platte aus federndem Material. Dies dient der preiswerten Herstellung von Lastzellen. Die eine Verformung detektierenden Elemente werden kollektiv auf die Oberfläche der Verformungskörper an geeigneten Stellen aufgebracht. Die Platte wird mit Einschnitten zum Vorbereiten einer Vereinzelung der einzelnen Verformungskörper versehen.

Um einen Dehnmessstreifen vor Korrosion zu schützen und die Messeigenschaften zu verbessern, wird in der JP 7 113 697 A vorgeschlagen, dass zur Verhinderung des Eindringens von Feuchtigkeit ein dünner anorganischer Film, beispielsweise SiO₂ mit einer Dicke von etwa 100 Nanometern (nm), sozusagen als Feuchtigkeitsbarriereschicht auf die Oberfläche des Dehnmessstreifens aufgebracht wird. Anschliessend wird ein organischer Isolationsfilm, beispielsweise Polyimid mit einer Dicke von etwa 10 Mikrometern (µm) aufgebracht, mittels dessen mikroskopisch kleine Löcher oder Risse im anorganischen Film, sogenannte Pinholes, durch welche weiterhin Feuchtigkeit eindringen könnte, verstopft werden. Die durch diese zweilagige Schicht erzeugte Schutzwirkung ist nicht immer befriedigend, insbesondere bei den für relativ niedrige Lasten ausgelegten, hochempfindlichen Kraftmesszellen.

Die DE 40 15 666 C2 offenbart einen mit Dehnmessstreifen beaufschlagten Kraftaufnehmer, wobei ein Dehnmessstreifen und der daran angrenzende Teil des Trägers mit einer aufgedampften diffusionsdichten elektrisch isolierenden Beschichtung aus Siliziumoxid oder Siliziumkarbid versehen wird, deren Schichtdicke vorzugsweise zwei bis vier Mikrometer beträgt. In einer anderen Ausführungsform kann die Beschichtung auch aus einer unteren Siliziumoxidschicht und einer darüber befindlichen Metallschicht, vorzugsweise einer Nickelschicht, bestehen.

Die Problematik bei den oben genannten Lösungen besteht darin, dass die den Dehnmessstreifen insgesamt bedeckenden Schutzschichten oder -folien, insbesondere die anorganischen Schichten oder Folien mit hoher Barrierewirkung, sei es, dass diese direkt auf den am Messgrössenaufnehmer applizierten Dehnmessstreifen, oder dass diese auf eine grossflächige Anordnung einer Vielzahl von Dehnmessstreifen anschliessend an deren Herstellung aufgebracht werden, aufgrund ihrer vergleichsweise grossen Masse und hohen Steifigkeit ebenfalls das mit dem Dehnmessstreifen ermittelte Messresultat verändern. Diese Messfehler entstehen durch einen sogenannten Kraftnebenschluss, verursacht durch die Bedeckung des Dehmessstreifens mit einer relativ dicken Schicht oder Folie in der Grössenordnung von einigen Mikrometern, wie sie der Stand der Technik offenbart. Insbesondere Metallschichten oder -folien tragen aufgrund ihrer vergleichsweise hohen Steifigkeit bereits ab einer Dicke von wenigen Mikrometern (µm) zu einem messbaren Kraftnebenschluss bei. Ein solcher Kraftnebenschluss entsteht beispielsweise dadurch, dass dicke anorganische Schutzschichten wegen ihrer hohen Steifigkeit signifikant zur Gesamtsteifigkeit der eingangs genannten Biegestellen des Verformungskörpers beitragen. Im Falle von Kraftmesszellen zum Messen kleiner Kräfte ist dies besonders problematisch, da hier die Biegestellen zum Erzielen einer hohen Empfindlichkeit nur eine geringe Dicke aufweisen. Das heisst unerwünschte Veränderungen der elastischen Eigenschaften der Schutzschicht, wie zum Beispiel anelastische Nachwirkung, hohe Inelastizität, insbesondere Dehnungshysterese, führen zu einem nicht reproduzierbaren und damit auch softwaretechnisch nicht kompensierbaren Messfehler.

Andererseits ist es natürlich erforderlich, Durchgangsbereiche für die Feuchtigkeit, die bevorzugt in sehr dünnen Feuchtigkeitsbarriereschichten entstehen können, die sogenannten Pinholes, wie sie die JP 7 113 697 A beschreibt, in einer solchen Barriereschicht weitestgehend zu vermeiden oder zumindest deren Einfluss zu verringern.

Es ist daher die Aufgabe der vorliegenden Erfindung für Dehnmessstreifen eine Schutzschicht vorzuschlagen, welche das Eindringen von Feuchtigkeit verhindert. Es sollen dabei auch die Kanten eines Dehnmessstreifens, insbesondere seines Trägers, in einem möglichst grossen Bereich von der Schutzschicht bedeckt werden können. Ferner soll für auf einen Verformungskörper einer Kraftmesszelle aufbringbare Dehnmessstreifen ein Kraftnebenschluss vermieden oder zumindest erheblich verringert werden.

Diese Aufgabe wird durch eine Reihen oder Flächenanordnung von Dehnmessstreifen gemäss Anspruch 1 sowie durch ein Verfahren zur Erzeugung einer solchen gemäss Anspruch 8 gelöst.

Ein Dehnmessstreifen derselben weist eine dehnungsempfindliche auf einem aus polymerem Trägermaterial bestehenden Träger aufgebrachte elektrische Widerstandsbahn und Anschlusselektoden zur Kontaktierung der Widerstandsbahn auf. Erfindungsgemäss ist der Träger der Reihen- oder Flächenanordnung durch eine Schlitzanordnung durchbrochen, wobei dadurch entstehende Verbindungsstellen vorhanden sind, durch welche die Träger benachbarter Dehnmessstreifen miteinander verbunden sind. Auf die mit einer Schlitzanordnung versehene Reihen- oder Flächenanordnung von Dehnmessstreifen ist eine Mehrlagenschicht als Schutzschicht aufgebracht, deren einzelne Schichten im Verlauf des Aufbringens auf der jeweiligen Unterlage durch haftende Beschichtungsverfahren erzeugt wurden.

In einer vorteilhaften Ausführungsform der Reihen oder Flächenanordnung von Dehnmessstreifen besteht die Schlitzanordnung aus sich entlang den Seiten eines Dehnmessstreifens erstreckenden Schlitzen, wobei jeder Schlitz sich über nahezu die gesamte entsprechende Seitenlänge eines Dehnmessstreifens erstreckt. Insbesondere im Fall einer Flächenanordnung von Dehnmessstreifen können jedoch die Schlitze auch einen rechten Winkel bildend um die mit ihren jeweiligen Anschlusselektroden verbundenen Widerstandsbahnen teilweise herum reichen und nur noch an zwei oder drei Verbindungsstellen des Trägers miteinander verknüpft sein.

Ein Verfahren zur Erzeugung einer Mehrlagenschicht als Schutzschicht auf einer Reihen- oder Flächenanordnung von Dehnmessstreifen nach Anspruch 6 trägt ebenfalls zur Lösung der Aufgabe bei. Bei einer Reihen- oder Flächenanordnung von Dehnmessstreifen, wobei die Dehnmessstreifen eine dehnungsempfindliche auf einem aus polymerem Trägermaterial bestehenden Träger aufgebrachte elektrische Widerstandsbahn und Anschlusselektroden zur Kontaktierung der Widerstandsbahn aufweisen, wird vor dem Beschichtungsvorgang der Träger durch eine jeden einzelnen Dehnmessstreifen umgebende Schlitzanordnung durchbrochen. Dabei entstehen Verbindungsstellen, durch welche die Träger benachbarter Dehnmessstreifen miteinander verbunden sind. Anschliessend wird auf die mit einer Schlitzanordnung versehene Reihen- oder Flächenanordnung von Dehnmessstreifen eine Mehrlagenschicht als Schutzschicht aufgebracht wird, deren einzelne Schichten im Verlauf des Aufbringens auf der jeweiligen Unterlage durch haftende Beschichtungsverfahren erzeugt werden.

In spezieller Ausgestaltung wird eine Schlitzanordnung aus sich entlang den Seiten eines Dehnmessstreifens erstreckenden Schlitzen, insbesondere durch Ausstanzen von Material aus dem Träger erzeugt, wobei jeder Schlitz sich über nahezu die gesamte entsprechende Seitenlänge eines Dehnmessstreifens erstreckt.

Durch die erfindungsgemässe Verbesserung einer Reihen oder Flächenanordnung von Dehnmessstreifen sowie vermittels des Verfahrens zur Erzeugung einer solchen bleiben bei einer Vereinzelung der Dehnmessstreifen die Seitenflächen, insbesondere des Trägers nicht mehr offen. Dabei ist darauf zu achten, die Verknüpfung des Trägers an den Verbindungsstellen zu minimieren, so dass einerseits die Kanten eines Dehnmessstreifens in einem möglichst grossen Bereich von der Schutzschicht bedeckt werden können, andererseits aber für die Handhabung der Reihen- oder Flächenanordnung von Dehnmessstreifen noch ein genügend hoher Zusammenhalt des Trägers vorhanden ist. Auf diese Weise kann das Eindringen von Feuchtigkeit gegenüber Dehnmessstreifen aus einer Reihen oder Flächenanordnung des Standes der Technik verringert und die Empfindlichkeit einer mit solchen Dehnmessstreifen beaufschlagten Kraftmesszelle nachhaltig verbessert werden.

Die als Mehrlagenschicht ausgebildete Schutzschicht auf der Reihen oder Flächenanordnung setzt sich in vorteilhafter Ausbildung aus einer abwechselnden Folge von einer Polymerschicht und einer Barriereschicht zusammen, wobei die Mehrlagenschicht aus mindestens drei dünnen Einzelschichten gebildet wird. Insbesondere kann eine Polymerschicht die Grenzschicht der Mehrlagenschicht zum Träger und/oder der Widerstandsbahn bilden, welche Polymerschicht die Oberfläche des zu beschichtenden Bereichs hinsichtlich Rauhigkeiten ausebnet und Kanten und senkrecht zur Schichtebene verlaufende Flächen bedeckt. Auf dieser Polymerschicht wird eine dünne Barriereschicht abgeschieden, welcher Barriereschicht eine weitere dünne Polymerschicht folgt. Der Vorgang des Beschichtens mit einer abwechselnden Folge von einer dünnen Barriereschicht und einer dünnen Polymerschicht kann beliebig oft wiederholt werden, wobei als Grenzschicht zur Umgebungsatmosphäre eine Polymerschicht oder eine dünne Barriereschicht (20) vorhanden sein kann.

Die Herstellung der Mehrlagenschicht kann durch abwechselnde Beschichtung mit Polymerschichten und Barriereschichten innerhalb einer Beschichtungsapparatur mittels mindestens zweier Quellen in einem Arbeitsgang erfolgen. Bevorzugt wird vor dem Beschichtungsvorgang die Unterlage der Mehrlagenschicht einer Plasmareinigung oder einer chemischen Reinigung unterzogen.

Die Erfindung nutzt somit femer die ausgezeichneten Barriereeigenschaften, welche die vorwiegend anorganischen Materialien aufweisen, aus und reduziert durch die Verwendung sehr dünner Barriereschichten die an sich sehr hohe Steifigkeit von dicken anorganischen Schichten, welche im Stand der Technik verwendet werden. Dies erfolgt durch eine Mehrfachbeschichtung aus einer abwechselnden Folge von dünnen Barriereschichten und dünnen Polymerschichten. Polymerschichten, die zwar nur eine mässige Barrierewirkung zeigen, und daher oftmals für sich alleine keinen ausreichenden Feuchtigkeitsschutz bieten können, dafür aber eine erheblich geringere Steifigkeit besitzen, sind dazu geeignet, zusammen mit dünnen, vorwiegend anorganischen Barriereschichten der Mehrlagenschicht insgesamt eine niedrige Steifigkeit zu verleihen. Auf diese Weise bleiben die eingangs erwähnten mit der geringen Steifigkeit verbundenen Vorteile eines polymeren Trägermaterials für einen Dehnmessstreifen erhalten. Durch sehr dünnen Barriereschichten innerhalb der Mehrlagenschicht wird die Gefahr oben beschriebenen Kraftnebenschlusses weitestgehend vermieden. Die Steifigkeit einer etwa 5 Nanometer (nm) bis 200 Nanometer (nm), in Einzelfällen bis 500 nm, vorzugsweise jedoch 10 nm bis 50 nm, dicken vorwiegend anorganischen Isolator- oder Metallschicht als Barriereschicht ist gering und liegt etwa in der gleichen Grössenordnung, wie die der ihr benachbarten Polymerschichten.

Die aus der Beschichtungstechnologie für dünne Schichten bekannten, sogenannten Pinholes, das heisst mikroskopisch kleine Löcher oder auch Risse in den Barriereschichten, werden durch die Polymerschichten innerhalb der Mehrlagenschicht ebenfalls reduziert. Grösse und Anzahl der Pinholes in einer Barriereschicht hängen nämlich, neben vielen anderen Beschichtungsparametern und natürlich dem Schichtmaterial, auch von der Rauhigkeit und Ebenheit des Untergrundes ab, aber nur wenig von der Schichtdicke. Durch einen ausebnenden Effekt der Polymerschichten wird die Entstehung von Pinholes weitgehend vermieden oder zumindest deren Einfluss verringert. Die Abfolge von dünnen Barriereschichten mit einer Dicke von etwa 5 nm bis 200 nm, in Einzelfällen bis 500 nm, vorzugsweise jedoch 10 nm bis 50 nm, und Polymerschichten der Dicke von 50 nm bis etwa 1500 nm bewirkt für obengenannte Pinholes erstens eine gewisse Abdichtung und zweitens gewährleistet sie, dass Pinholes zweier "benachbarter" Barriereschichten örtlich versetzt sind, und behindert das Eindringen von Feuchtigkeit an solchen Schwachstellen in Form eines Labyrinths für die Wasser- und die Lösungsmittelmoleküle. Somit kann für Dehnmessstreifen ein effizienter Feuchtigkeitsschutz erzielt werden, ohne dass das Messergebnis beeinträchtigt wird.

Durch die Erfindung wird ein weiterer, mit dicken anorganischen Barriereschichten verbundener Nachteil beseitigt, nämlich der der Gefahr eines Ablösens der Schicht, der sogenannten Delamination. Diese Delamination entsteht dadurch, dass durch die hohe Steifigkeit einer vergleichsweise dicken Barriereschicht der Übergang von der Oberfläche des Dehnmessstreifens zur Barriereschicht erheblichen mechanischen Spannungen ausgesetzt ist. Die erfindungsgemässe Verwendung von dünnen Barriereschichten in abwechselnder Folge mit dünnen Polymerschichten besitzt hinsichtlich des unerwünschten Lösens einer Barriereschicht von ihrer Unterlage eine sehr hohe Stabilität.

In ihrer Verwendung als gesamthaft dünne, mehrlagige Schutzschichten mit einer Abfolge von dünnen, vorwiegend anorganischen Barriereschichten und ausebnenden Polymerschichten bedecken die Mehrlagenschichten einen auf einer Kraftmesszelle aufbringbaren Dehnmessstreifen. Dabei dienen sie hauptsächlich dazu, die negativen Einflüsse ansonsten eindringender Feuchtigkeit auf das mit einer solchen Kraftmesszelle gemessene Ergebnis zu minimieren und gleichzeitig einen eben dieses Messergebnis verfälschenden Kraftnebenschluss, welcher beispielsweise bei der Verwendung dicker Barriereschichten oder -folien entsteht, weitgehend zu verhindern.

Auf diese Weise ist es möglich, die Empfindlichkeit von Kraftmesszellen mit einem oder mehreren auf einem Verformungskörper als Wandler applizierten Dehnmessstreifen nachhaltig zu verbessern, so dass beispielsweise die Auflösung von mit solchen Kraftmesszellen versehenen Waagen einem Bereich zugänglich wird, der bis anhin nur Waagen mit nach dem Prinzip der elektromagnetischen Kraftkompensation arbeitenden Kraftmesszellen zugänglich war.

In der folgenden Beschreibung ist die Erfindung anhand von Ausführungsbeispielen unter Bezugnahme auf die stark schematisierten Zeichnungen näher erläutert. Es zeigen:
- Figur 1: einen einzelnen Dehnmessstreifen mit einer aufgebrachten Mehrlagenschicht in dreidimensionaler Darstellung,
- Figur 2: einen einzelnen Dehnmessstreifen mit einer aufgebrachten Mehrlagenschicht im Schnitt,
- Figur 3: eine Reihenanordnung von Dehnmessstreifen mit Schlitzen im Trägermaterial zwischen benachbarten Dehnmessstreifen,
- Figur 4: eine Flächenanordnung von Dehnmessstreifen mit Schlitzen im Trägermaterial zwischen benachbarten Dehnmessstreifen.

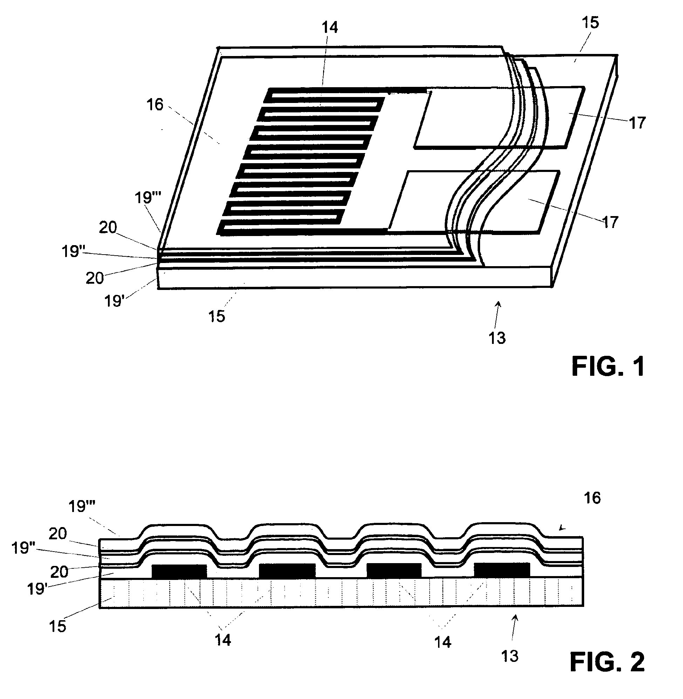

Figur 1 zeigt in dreidimensionaler Darstellung einen einzelnen auf einem Träger 15 angeordneten Dehnmessstreifen 13, welcher eine dehnungsabhängige Widerstandsbahn 14, die vorzugsweise mäanderförmig auf einem Träger 15 angeordnet ist, sowie Anschlusselektroden 17 aufweist, und der mit einer Mehrlagenschicht 16 versehen ist. Der Übersicht halber ist hier die Mehrlagenschicht 16 durchsichtig und gebrochen gezeichnet. Sie besteht aus einer regulären Abfolge von Polymerschichten 19', 19", 19"', vorzugsweise aus einem Polyacrylat oder Polymethacrylat, und Barriereschichten 20, aus einem vorwiegend anorganischen Isolator, wobei die Polymerschichten 19', 19", 19"' eine Dicke von typischerweise 50 bis 500 nm, vorzugsweise 100 nm bis 200 nm aufweisen, in Einzelfällen aber auch darüber hinausgehend eine Schichtdicke von bis zu 1500 nm besitzen können. Die Schichtdicke der Barriereschichten 20 liegt typischerweise zwischen 5 nm und 200 nm, vorzugsweise zwischen 10 nm und 50 nm, kann in Einzelfällen auch bis zu 500 nm betragen.

Die Seitenkanten des Trägers 15 sind in der Figur 1 nicht von der Mehrlagenschicht bedeckt eingezeichnet.

Der Aufbau und die bevorzugte Abfolge der Einzellagen oder -schichten in der Mehrlagenschicht 16 kommt in der Figur 2 zum Ausdruck, welche einen Schnitt durch einen Dehnmessstreifen 13 mit einer aus insgesamt fünf dünnen Einzelschichten bestehenden aufgebrachten Mehrlagenschicht 16 zeigt. Allerdings ist die Zeichnung stark schematisiert und es sind die jeweilige Dicke des Trägers 15, der Widerstandsbahn 14 und der Barriereschichten 20 sowie der Polymerschichten 19', 19", 19"' hier nicht massstabgetreu gezeichnet.

Die dem Träger 15 und in den Bereichen der auf dem Träger 15 aufgebrachten Widerstandsbahn 14 letzterer direkt benachbarte und Träger und Widerstandsbahn berührende erste Schicht 19' der Mehrlagenschicht 16 ist bevorzugt eine Acrylat-Polymerschicht, welche dazu dient, Rauhigkeiten von Träger 15 und Widerstandsbahn 14 zu glätten. Sie kann unter Umständen eine höhere Dicke aufweisen, als die weiteren polymeren Zwischenschichten 19" der Mehrlagenschicht 16. Mit solchen Acrylat-Polymerschichten kann die Rauhigkeit einer Unterlage im Nanometerbereich ausgeebnet werden. Auf diese Weise wird die Bildung einer fehlstellenarmen folgenden Barriereschicht 20 begünstigt, das heisst, dass das Entstehen von Pinholes in der ersten Barriereschicht 20 durch die glättende Wirkung ihrer Unterlage verringert wird.

Ein weiterer Grund, die erste Polymerschicht 19' der Mehrlagenschicht 16 verglichen mit den übrigen Polymerschichten 19", 19"' etwas dicker aufzubringen, besteht darin, dass die Forderung besteht, die seitlichen Kanten der Widerstandsbahn 14 vollständig zu bedecken. Eine genannte Polymerschicht erfüllt diese Forderung durch ihre einerseits auf Nanometerskala ausebnenden Eigenschaften und andererseits ihrer auf Mikrometerskala sowohl in gewissem Masse ausebnenden als auch die vorwiegend senkrecht zur Schichtebene verlaufende Flächen abdeckenden Eigenschaften. Somit schafft sie die Voraussetzung für die Bildung von gleichmässig dicken und fehlstellenarmen Barriereschichten 20 und folgenden Schichten der Mehrlagenschicht 16.

Auf die erste Barriereschicht 20 folgt eine polymere Zwischenschicht. Ihre Funktion ist neben der Stabilisierung der ersten Barriereschicht 20 auch eine Reduktion der Entstehung von Pinholes in einer weiteren, der Zwischenschicht 19" folgenden Barriereschicht 20 durch ihre glättende Wirkung. Insbesondere wird aber durch die Zwischenschicht 19" vermieden, dass die dennoch in geringer Anzahl entstandenen Pinholes einer zweiten Barriereschicht 20 sich an solchen der ersten Barriereschicht 20 fixieren, was den Feuchtigkeitsdurchgang wieder begünstigen würde. Vielmehr entsteht durch die voneinander unabhängige Lokalisierung der Pinholes in der ersten und in der zweiten Barriereschicht 20 eine Art Labyrinth für eindringende Feuchtigkeit, insbesondere Wasser oder Lösungsmittelmoleküle. Dieser Labyrintheffekt führt in einer mehrlagigen Beschichtung mit aufeinander folgenden Barriereschichten 20 und Polymerschichten 19', 19", 19''' zu einer drastischen Reduktion eindringender Feuchtigkeit.

Die in der Figur 2 gezeigte Mehrlagenschicht 16 weist fünf dünne Einzelschichten auf, wovon die erste Schicht die ausebnende Polymerschicht 19' ist und die die Grenzschicht zur Umgebungsatmosphäre bildende Schicht wiederum eine Polymerschicht 19"' ist, um die Mehrlagenschicht 16 vor allem gegen mechanische Beschädigung zu stabilisieren. Die Mehrlagenschicht 16 kann noch weitere Einzelschichten aufweisen; die Sequenz aus Polymerschicht 19" und Barriereschicht 20 kann im Prinzip beliebig oft wiederholt werden. Die Mehrlagenschicht 16 kann aber auch aus insgesamt nur drei dünnen Einzelschichten bestehen, bevorzugterweise aus einer Abfolge von Polymerschicht 19' ― Barriereschicht 20 ― Polymerschicht 19"'.

Als Materialien für die Barriereschichten 20 sind eine Vielzahl der bekannten, in verschiedenen Beschichtungsverfahren aufbringbaren vorwiegend anorganischen Isolatoren verwendbar. Als Beispiele seien hier Oxide, Nitride, Fluoride, Karbide, Boride oder Kombinationen davon, insbesondere Oxi-Nitride, oder auch Mischkeramiken genannt. Insbesondere haben sich Siliziumoxid, Titanoxid, Chromoxid, Aluminiumoxid, Siliziumnitrid und Titannitrid als Material für die Barriereschichten 20 bewährt. Auch die sogenannten "diamond-like carbon"-Schichten können als mögliche Barriereschichten 20 Verwendung finden.

Als weitere Materialien für die Barriereschichten 20 kommen insbesondere auch Metalle, beispielsweise Silber, Aluminium, Gold, Chrom, Kupfer, Nickel, Titan, sowie Legierungen, beispielsweise Nickel-Kobalt-Legierungen, oder intermetallische Verbindungen, zum Beispiel aus Aluminium und Kupfer, aus Wolfram und Kupfer oder aus Titan und Aluminium in Frage.

Neben Acrylat-Polymeren können für die Polymerschichten 19', 19", 19"' auch weitere polymere Materialien Verwendung finden. Als Beispiele seien angeführt: polymere Amide, Alkyde, Styrole, Xylylene, Phenylene, Aldehyde, Estere, Urethane, Epoxide, Imide, Phenole, Ketone sowie Fluorpolymere oder Copolymere, wobei die Auflistung hier nicht abschliessend sein kann. Letztendlich entscheidet die Optimierung zwischen Barrierewirkung, Kombinierbarkeit der Barriereschicht 20 und der Polymerschicht 19', 19", 19"', sowie Wirtschaftlichkeit der Beschichtungsmethode über die Verwendung des Barriereschichtmaterials ebenso wie über die Verwendung des Polymermaterials.

Eine weitere Klasse von Materialien, die als polymere Zwischenschichten 19" oder Polymere Abdeckschicht 19''' Verwendung finden können, sind anorganischorganische Hybridpolymere mit dem Handelsnamen "ORMOCER". Diese Materialien, welche in der DE 38 28 098 A1 und DE43 03 570 A1 beschrieben sind, besitzen eine gute Elastizität und eine gewisse Barrierewirkung gegenüber eindringender Feuchtigkeit. Allerdings ist die Barrierewirkung nicht hoch genug, als dass sie sich für eine Verwendung als Barriereschicht 20 eignen würde. Ein besonderer Vorteil von ORMOCERen ist, dass diese Materialien an Luft abgeschieden werden können, beispielsweise durch Sprüh-, Schleuder- oder Tampondruckverfahren.

Ungeachtet der Materialfrage besitzt eine dünne Barriereschicht 20 eine entsprechend geringe Steifigkeit. Daher ist im Zusammenwirken mit der an sich flexiblen Polymerschicht 19', 19", 19"' nur ein minimaler Kraftnebenschluss durch das Aufbringen einer Mehrlagenschicht 16 mit ultradünnen Barriereschichten 20 auf Dehnmessstreifen 13 zu befürchten. Aus demselben Grund ist die Gefahr des Ablösens der ultradünnen Barriereschichten 20 von ihrer Unterlage (Delamination) massiv reduziert und konnte für im Rahmen der Erfindung verwendete Materialien nicht beobachtet werden.

Wenn die Beschichtung von Dehnmessstreifen 13 mit einer Mehrlagenschicht 16 im Anschluss an die Herstellung der Dehnmessstreifen 13 erfolgt, solange diese noch in einer Reihen- oder Flächenanordnung vorhanden sind, bleiben bei einer Vereinzelung der Dehnmessstreifen 13 allerdings die Seitenflächen, insbesondere der Trägerfolie, offen und eindringender Feuchtigkeit zugänglich. Aufgrund der Flächenverhältnisse von Oberseite und Seitenkanten eines Dehnmessstreifens ist jedoch die Schutzwirkung der erfindungsgemässen Mehrlagenschicht 16 immer noch recht hoch. Es können mit dieser äusserst effizienten Beschichtungsmethode Dehnmessstreifen 13 hergestellt werden, deren Feuchtigkeitsaufnahme, abhängig von den verwendeten Materialien um einen Faktor 50 bis 1000 geringer ausfällt, im Vergleich zu unbeschichteten Dehnmessstreifen. Für den Fall, dass eine höhere Barrierewirkung, als die genannte erreicht werden müsste, ist es selbstverständlich auch möglich einzelne Dehnmessstreifen 13, gegebenenfalls rundum, zu beschichten, wodurch die Seitenflächen des Trägers 15, zumindest bei vorsichtiger Handhabung, abgedeckt wären.

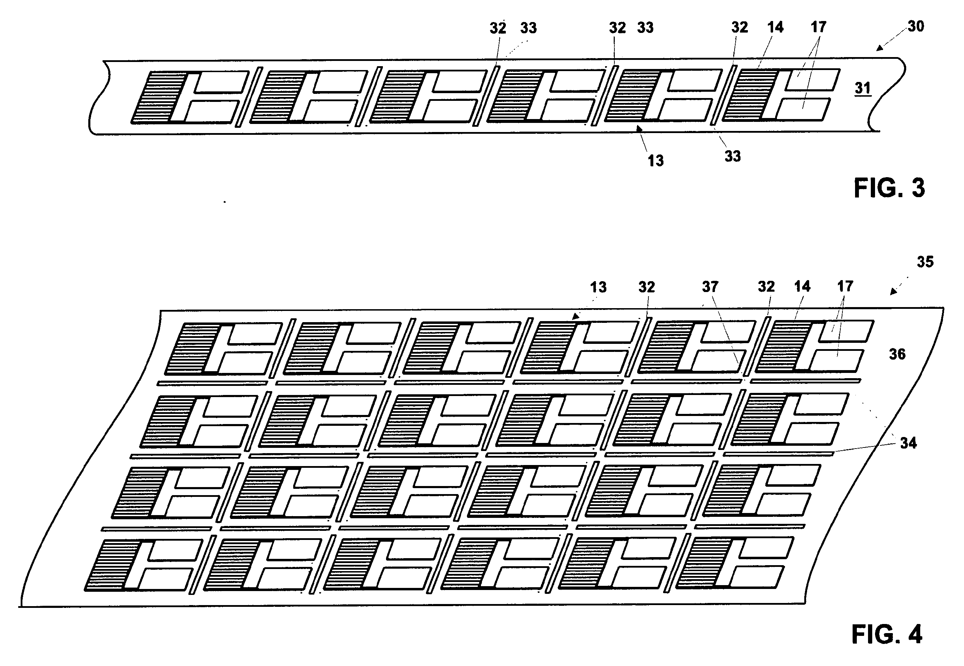

Eine Möglichkeit, die Seitenkanten von Dehnmessstreifen 13 in einer Reihen- oder Flächenanordnung mit einer Schutzschicht, insbesondere in Form einer beschriebenen Mehrlagenschicht, zumindest teilweise, zu bedecken, soll anhand der Figuren 3 und 4 beschrieben werden. Die Figur 3 zeigt eine Reihenanordnung 30 von Dehnmessstreifen 13. Zwischen den einzelnen mit ihren jeweiligen Anschlusselektroden 17 verbundenen Widerstandsbahnen 14 ist der Träger 31 der Reihenanordnung 30 durch schmale, quer zur Längsausdehnung der Reihenanordnung 30 orientierte Schlitze 32 durchbrochen, wobei die Schlitze 32 nicht über die gesamte Breite des Trägers 31 der Reihenanordnung 30 reichen. Die Schlitze 32 können nach dem Aufbringen der Widerstandsbahn 14 und der Anschlusselektroden 17 durch verschiedene Verfahren, wie Wasserschneiden, Laserschneiden oder in bevorzugter Weise auch durch Stanzen im Träger 31 erzeugt werden. Dies erfolgt vor dem Bedecken der Reihenanordnung 30 mit einer Schutzschicht, insbesondere einer oben beschriebenen Mehrlagenschicht 16. Auf diese Weise sind die Ränder eines Dehnmessstreifens bis auf die noch während des Beschichtens vorhandenen möglichst klein dimensionierten Verbindungsstellen 33 des Trägers 31, welche bei der anschliessenden Vereinzelung der Dehnmessstreifen 13 durchtrennt werden, ebenfalls mit einer Schutzschicht versehen.

Die Figur 4 zeigt eine Flächenanordnung 35 von Dehnmessstreifen 13, in welcher in den Bereichen zwischen den einzelnen mit ihren jeweiligen Anschlusselektroden 17 verbundenen Widerstandsbahnen 14 Schlitze 32 und senkrecht dazu angeordnete Schlitze 34 den Träger 36 der Flächenanordnung 35 durchbrechen, so dass dieses lediglich an jeweils vier Verbindungsstellen 37 um jeden Dehnmessstreifen 13 verbunden ist. Die Schlitze 32, 34 werden an jenen Stellen eines Trägers erzeugt, an welchen bei einer späteren Vereinzelung der Dehnmessstreifen 13 diese aus der Flächenanordnung 35 herausgetrennt werden. Eine solche Schlitzanordnung kann jedoch in vielfältiger Weise variiert werden, beispielsweise derart dass die Schlitze einen rechten Winkel bildend um die mit ihren jeweiligen Anschlusselektroden 17 verbundenen Widerstandsbahnen 14 teilweise herum reichen und nur noch an zwei oder drei Verbindungsstellen des Trägers 36 miteinander verknüpft sind. Selbstverständlich können die Dehnmessstreifen untereinander auch an mehr als vier Verbindungsstellen miteinander verknüpft sein.

Wichtig ist es die Verknüpfung des Trägers 31, 36 an den Verbindungsstellen 33, 37 zu minimieren, das heisst die Fläche der Verbindungsstellen 33, 37 so gering zu halten, dass einerseits die Kanten eines Dehnmessstreifens 13 in einem möglichst grossen Bereich von der Schutzschicht bedeckt werden können, andererseits aber für die Handhabung der Reihenanordnung 30 oder Flächenanordnung 35 von Dehnmessstreifen 13 noch ein genügend hoher Zusammenhalt des Trägers 31, 36 vorhanden ist. Es hat sich gezeigt, dass auf diese Weise das Eindringen von Feuchtigkeit gegenüber Dehnmessstreifen aus einer Reihen oder Flächenanordnung des Standes der Technik verringert und die Empfindlichkeit einer mit solchen Dehnmessstreifen beaufschlagte Kraftmesszelle nachhaltig verbessert werden konnte.

Die Breite eines Schlitzes 32, 37 ist so zu wählen, dass einerseits nicht zu viel Trägermaterial zwischen den einzelnen Dehnmessstreifen 13 verloren geht und andererseits die aufzubringenden Beschichtungsmaterialien eine genügende Bedeckung der Seitenkanten eines Dehnmessstreifens 13 gewährleisten. Eine Breite von etwa 0,5 mm sei hier als Orientierungswert genannt.

Innerhalb einer Mehrlagenschicht 16 sind die einzelnen Barriereschichten 20 nicht notwendigerweise aus dem selben Material. Ebenso wenig sind die Polymerschichten 19', 19", 19"' auf ein einziges Material beschränkt.

Bevorzugt ist, dass die Mehrlagenschicht 16 aus einer abwechselnden Folge von einer Polymerschicht 19', 19", 19"', insbesondere einer Polyacrylat- oder Polymethacrylat-Schicht und einer Barriereschicht 20, vorzugsweise aus Siliziumoxid oder Aluminiumoxid, aufgebaut ist, wobei aufgrund der Wahl eines effizienten Beschichtungsverfahrens die jeweils verwendeten Materialien einheitlich sind, ebenso wie auch die einzelnen Schichten in sich homogen sind. Die Grenzschicht zum Träger 15 beziehungsweise zur Widerstandsbahn 14 und den Anschlusselektroden 17 ist eine Polymerschicht 19', für die Grenzschicht zur Umgebungsatmopshäre ist dies nicht zwingend notwendig, wenngleich bevorzugt, da eine abschliessende Polymerschicht 19"' einen guten mechanischen und gegebenenfalls chemischen Schutz für eine letzte Barriereschicht 20 bietet. Dies bedeutet, dass gegebenenfalls die Wahl des verwendeten Polymermaterials für die abschliessende Polymerschicht 19"' hinsichtlich der Eigenschaft, einen besonders guten mechanischen und/oder chemischen Schutz bieten zu können, erfolgt.

Um gegebenenfalls auftretende Probleme bei der elektrischen Kontaktierung der Widerstandsbahn 14 an den Anschlusselektroden 17 zu vermeiden, können auch diese frei von einer Beschichtung belassen werden. Hierzu ist es notwendig beim Beschichten mit Masken zu arbeiten, die die zu beschichtenden Bereiche frei lassen.

Die bevorzugte Methode zur Herstellung einer Mehrlagenschicht 16 auf einer Reihenoder Flächenanordnung von Dehnmessstreifen 13 umfasst die folgenden Schritte: Aufbringen einer im Nanometerbereich ausebnenden Polymerschicht 19' mit einer Dicke, die zwischen 200 nm und 1500 nm liegt, Abscheiden einer etwa 20 nm dicken, Barriereschicht 20 auf der Polymerschicht 19', Abscheiden einer weiteren dünnen Polymerschicht 19" mit einer Dicke von etwa 100 nm bis 200 nm auf der Barriereschicht 20, beliebig häufige Wiederholung des Vorgangs des Beschichtens mit einer Barriereschicht 20 und einer Polymerschicht 19", wobei als Grenzschicht zur Umgebungsatmosphäre eine Polymerschicht 19"' oder eine dünne Barriereschicht 20 vorhanden sein kann.

Es kann sich als nützlich erweisen, vor Beginn des Beschichtungsvorgangs die Unterlage der Mehrlagenschicht 16, sei dies der Träger 15, 31, 36 eine Trägerfolie oder die Widerstandsbahn 14 einer Plasmareinigung oder einer chemischen Reinigung zu unterziehen.

Beim Aufbringen der Mehrlagenschicht steht eine grosse Auswahl von Beschichtungsverfahren zu Verfügung. Es seien hier für das Erzeugen der Barriereschichten 20 beispielhaft Aufdampfen im Vakuum, Aufdampfen an Luft, Plasmabeschichten, "sputtern", Sol-Gelverfahren, "chemical vapor deposition (CVD)", "combustion chemical vapor deposition (CCVD)", "plasma enhanced chemical vapor deposition (PECVD)", "plasma impulse chemical vapor deposition (PICVD)", sowie, insbesondere für das Aufbringen von Metallen, elektrochemisches Abscheiden, genannt. Für das Aufbringen der Polymerschichten sind folgende Beschichtungsmethoden möglich: Aufdampfen im Vakuum, Aufdampfen an Luft, insitu-Polymersisation von durch "flash evaporation" oder Plasmabeschichten aufgebrachten Monomeren oder Oligomeren, sowie Elektrophorese, Kataphorese oder Anaphorese.

Als besonders effizient erweist sich ein Verfahren zum Beschichten von auf dem Verformungskörper einer Kraftmesszelle aufbringbaren Dehnmessstreifen 13, mit einer Mehrlagenschicht 16, wenn die Herstellung der Mehrlagenschicht 16 durch abwechselnde Beschichtung mit Polymerschichten 19', 19", 19"' und Barriereschichten 20 innerhalb einer Beschichtungsapparatur mittels zweier Quellen in einem Arbeitsgang erfolgt.

### Bezugszeichenliste

- 13: Dehnmessstreifen
- 14: Widerstandsbahn
- 15: Träger
- 16: Mehrlagenschicht
- 17: Anschlusselektroden
- 19': Erste Polymerschicht
- 19": Polymere Zwischenschichten
- 19"': Polymere Abdeckschicht
- 20: Barriereschichten
- 30: Reihenanordnung von Dehnmessstreifen
- 31: Träger der Reihenanordnung
- 32: Schlitz
- 33: Verbindungsstelle
- 34: Schlitz
- 35: Flächenanordnung von Dehnmessstreifen
- 36: Träger der Flächenanordnung
- 37: Verbindungsstelle

## Patentansprüche

1. Reihen- oder Flächenanordnung (30, 35) von Dehnmessstreifen (13), welche Dehnmessstreifen (13) eine dehnungsempfindliche auf einem aus polymerem Trägermaterial bestehenden Träger (15, 31, 36) aufgebrachte elektrische Widerstandsbahn (14) und Anschlusselektoden (17) zur Kontaktierung der Widerstandsbahn (14) aufweisen, **dadurch gekennzeichnet, dass** der Träger (15, 31, 36) der Reihen- oder Flächenanordnung (30, 35) durch eine Schlitzanordnung durchbrochen ist, wobei **dadurch** entstehende Verbindungsstellen (33, 37) vorhanden sind, durch welche die Träger (15, 31, 36) benachbarter Dehnmessstreifen (13) miteinander verbunden sind und dass auf die mit einer Schlitzanordnung versehene Reihen- oder Flächenanordnung (30, 35) von Dehnmessstreifen eine Mehrlagenschicht (16) als Schutzschicht aufgebracht ist, deren einzelne Schichten im Verlauf des Aufbringens auf der jeweiligen Unterlage durch haftende Beschichtungsverfahren erzeugt wurden.

2. Reihen oder Flächenanordnung nach Anspruch 1, **dadurch gekennzeichnet, dass** die Schlitzanordnung aus sich entlang den Seiten eines Dehnmessstreifens (13) erstreckenden Schlitzen (32, 34) besteht, wobei jeder Schlitz (32, 34) sich über nahezu die gesamte entsprechende Seitenlänge eines Dehnmessstreifens (13) erstreckt.

3. Reihen oder Flächenanordnung nach Anspruch 1 oder 2, **dadurch gekennzeichnet, dass** insbesondere im Fall einer Flächenanordnung von Dehnmessstreifen (13) in den Bereichen zwischen den einzelnen mit ihren jeweiligen Anschlusselektroden (17) verbundenen Widerstandsbahnen (14) Schlitze (32) und senkrecht dazu angeordnete Schlitze (34) den Träger (36) durchbrechen, wobei jeweils vier Verbindungsstellen (37) an den Ecken der einzelnen Dehnmessstreifen (13) vorhanden sind.

4. Reihen oder Flächenanordnung nach Anspruch 1 oder 2, **dadurch gekennzeichnet, dass** insbesondere im Fall einer Flächenanordnung von Dehnmessstreifen (13) Schlitze einen rechten Winkel bildend um die mit ihren jeweiligen Anschlusselektroden (17) verbundenen Widerstandsbahnen (14) teilweise herum reichen und nur noch an zwei oder drei Verbindungsstellen des Trägers (36) miteinander verknüpft sind.

5. Reihen oder Flächenanordnung nach einem der Ansprüche 1 bis 4, **dadurch gekennzeichnet, dass** sich die Mehrlagenschicht (16) aus einer abwechselnden Folge von einer Polymerschicht (19', 19", 19"') und einer Barriereschicht (20) zusammensetzt, wobei die Mehrlagenschicht (16) aus mindestens drei dünnen Einzelschichten gebildet wird.

6. Reihen oder Flächenanordnung nach Anspruch 5, **dadurch gekennzeichnet, dass** eine Polymerschicht (19') die Grenzschicht der Mehrlagenschicht (16) zum Träger (15) und/oder der Widerstandsbahn (14) bildet, welche Polymerschicht (19') die Oberfläche des zu beschichtenden Bereichs hinsichtlich Rauhigkeiten ausebnet und Kanten und senkrecht zur Schichtebene verlaufende Flächen bedeckt.

7. Reihen oder Flächenanordnung nach Anspruch 5 oder 6, **dadurch gekennzeichnet, dass** eine Polymerschicht (19"') die Grenzschicht der Mehrlagenschicht (16) zur Umgebungsatmosphäre bildet.

8. Verfahren zur Erzeugung einer Schutzschicht auf einer Reihen- oder Flächenanordnung (30, 35) von Dehnmessstreifen (13), welche Dehnmessstreifen (13) eine dehnungsempfindliche auf einem aus einem polymeren Trägermaterial bestehenden Träger (15) aufgebrachte elektrische Widerstandsbahn (14) und Anschlusselektoden (17) zur Kontaktierung der Widerstandsbahn (14) aufweisen, **dadurch gekennzeichnet, dass** vor dem Beschichtungsvorgang der Träger (31, 36) der Reihen- oder Flächenanordnung (30, 35) durch eine jeden einzelnen Dehnmessstreifen (13) umgebende Schlitzanordnung durchbrochen wird, wobei Verbindungsstellen (33, 37) entstehen, durch welche die Träger (15) benachbarter Dehnmessstreifen (13) miteinander verbunden sind und wobei auf die mit einer Schlitzanordnung versehene Reihen- oder Flächenanordnung (30, 35) von Dehnmessstreifen eine Mehrlagenschicht (16) als Schutzschicht aufgebracht wird, deren einzelne Schichten im Verlauf des Aufbringens auf der jeweiligen Unterlage durch haftende Beschichtungsverfahren erzeugt werden.

9. Verfahren nach Anspruch 8, **dadurch gekennzeichnet, dass** eine Schlitzanordnung aus sich entlang den Seiten eines Dehnmessstreifens (13) erstreckenden Schlitzen (32, 34) erzeugt wird, wobei jeder Schlitz (32, 34) sich über nahezu die gesamte entsprechende Seitenlänge eines Dehnmessstreifens erstreckt.

10. Verfahren nach Anspruch 8 oder 9, **dadurch gekennzeichnet, dass** die Schlitzanordnung durch Wasserschneiden, Laserschneiden oder Ausstanzen von Material aus dem Träger (31, 36) erzeugt wird.

11. Verfahren nach einem der Ansprüche 8 bis 10, **dadurch gekennzeichnet, dass** eine ausebnende und Kanten sowie senkrecht zur Schichtebene verlaufende Flächen bedeckende Polymerschicht (19') auf mindestens einen Teil des Trägers (15) und/oder der Widerstandsbahn (14) und/oder der Anschlusselektroden (17) aufgebracht wird, auf der Polymerschicht (19') eine dünne Barriereschicht (20) abgeschieden wird, welcher Barriereschicht (20) eine weitere dünne Polymerschicht (19", 19"') folgt, und dass der Vorgang des Beschichtens mit einer abwechselnden Folge von einer dünnen Barriereschicht (20) und einer dünnen Polymerschicht (19") beliebig oft wiederholt wird, wobei als Grenzschicht zur Umgebungsatmosphäre eine Polymerschicht (19"') oder eine dünne Barriereschicht (20) vorhanden sein kann.

12. Verfahren nach einem der Ansprüche 8 bis 11, **dadurch gekennzeichnet, dass** die Herstellung der Mehrlagenschicht (16) durch abwechselnde Beschichtung mit Polymerschichten (19', 19", 19"') und Barriereschichten (20) innerhalb einer Beschichtungsapparatur mittels mindestens zweier Quellen in einem Arbeitsgang erfolgt.

13. Verfahren nach einem der Ansprüche 8 bis 12, **dadurch gekennzeichnet, dass** die Unterlage der Mehrlagenschicht (16) vor dem Beschichtungsvorgang einer Plasmareinigung oder einer chemischen Reinigung unterzogen wird.

## Claims

1. Single-row array or two-dimensional array (30, 35) of strain gauges (13), wherein said strain gauges (13) have a strain-sensitive electrical resistor track (14) and connector electrodes (17) for contacting the resistor track (14) arranged on a carrier substrate (15, 31, 36) consisting of a polymeric substrate material, **characterized in that** the carrier substrate (15, 31, 36) of the single-row array or two-dimensional array (30, 35) is perforated by an arrangement of slits, with connecting portions (33, 37) left in place through which the carrier substrates (15, 31, 36) of neighboring strain gauges (13) are connected to each other, and that a multilayered coating (16) is put as a protective coating on the single-row array or two-dimensional array (30, 35) of strain gauges after it has been provided with an arrangement of slits, wherein in the course of the deposition process each individual layer of the protective coating was applied to its respective underlying surface through an adhesive coating method.

2. Single-row array or two-dimensional array according to claim 1, **characterized in that** the arrangement of slits consists of slits (32, 34) that extend along the sides of a strain gauge (13), wherein each of the slits (32, 34) extends over nearly the entire length of a side of a strain gauge (13).

3. Single-row array or two-dimensional array according to claim 1 or 2, **characterized in that**, particularly in the case of a two-dimensional array of strain gauges (13), the carrier substrate (36) is perforated in the spaces between the individual resistor patterns (14) with their connector electrodes (17) by slits (32) aligned one way and by slits (34) aligned at right angles to the slits (32), so that the carrier substrate (36) hangs together by four connecting portions (37) at the corners of each strain gauge (13).

4. Single-row array or two-dimensional array according to claim 1 or 2, **characterized in that**, particularly in the case of a two-dimensional array of strain gauges (13), the individual resistor patterns (14) with their connector electrodes (17) are partly surrounded by slits forming right angles, with only two or three connecting portions of the carrier substrate (36) left in place around each strain gauge (13).

5. Single-row array or two-dimensional array according to one of the claims 1 to 4, **characterized in that** the multilayered coating (16) is composed of an alternating sequence of a polymer layer (19', 19", 19"') and a barrier layer (20), wherein the multilayered coating (16) is formed of at least three thin individual layers.

6. Single-row array or two-dimensional array according to claim 5, **characterized in that** a polymer layer (19') forms the boundary layer of the multilayered coating (16) to the carrier substrate (15) and/or to the resistor track (14), wherein the polymer layer (19') smoothes out the surface roughness of the area to be coated and covers edges and surfaces that are perpendicular to the plane of the layer.

7. Single-row array or two-dimensional array according to claim 5 or 6, **characterized in that** a polymer layer (19"') forms the boundary layer of the multilayered coating (16) to the ambient atmosphere.

8. Method of producing a protective coating on a single-row array or two-dimensional array (30, 35) of strain gauges (13), wherein said strain gauges (13) have a strain-sensitive electrical resistor track (14) and connector electrodes (17) for contacting the resistor track (14) arranged on a carrier substrate (15) consisting of a polymeric material, **characterized in that** prior to the coating process, the carrier substrate (31, 36) of the single-row array or two-dimensional array (30, 35) is perforated by an arrangement of slits along all sides of each individual strain gauge (13), whereby connecting portions (33, 37) are created through which the carrier substrates (15) of neighboring strain gauges (13) are connected to each other, wherein a multilayered coating (16) is put as a protective coating on the single-row array or two-dimensional array (30, 35) of strain gauges after it has been provided with an arrangement of slits, and wherein in the course of the deposition process each individual layer of the protective coating is applied to its respective underlying surface through an adhesive coating method.

9. Method according to claim 8, **characterized in that** an arrangement of slits is produced in the form of slits (32, 34) that extend along the sides of a strain gauge (13), wherein each of the slits(32, 34) extends over nearly the entire length of a side of a strain gauge (13).

10. Method according to claim 8 or 9, **characterized in that** the arrangement of slits is produced by removing material from the carrier substrate (31, 36) through water jet cutting, laser cutting or die-punching.

11. Method according to one of the claims 8 to 10, **characterized in that** a surface-smoothing polymer layer (19') that covers edges and also covers surfaces perpendicular to the plane of the layer is applied to at least a part of the carrier substrate (15) and/or of the resistor track (14) and/or of the connector electrodes (17); that a thin barrier layer (20) is deposited on the polymer layer (19'), which barrier layer (20) is followed by a further thin polymer layer (19", 19"'); and that the alternating sequence of depositing a thin barrier layer (20) and a thin polymer layer (19") is repeated a desired number of times, with either a polymer layer (19"') or a thin barrier layer (20) forming the boundary layer to the ambient atmosphere.

12. Method according to one of the claims 8 to 11, **characterized in that** the production of the multilayered coating (16) is performed in a single work operation within one deposition apparatus by depositing polymer layers (19', 19", 19"') and barrier layers (20) in alternating sequence by means of at least two sources.

13. Method according to one of the claims 8 to 12, **characterized in that** the underlying base surface of the multilayered coating (16) is subjected to a plasma-cleaning or chemical cleaning procedure prior to the deposition process.

## Revendications

1. Agencement de rangée ou de surface (30, 35) de jauge de contrainte (13), lesquelles jauges de contrainte (13) présentent une bande de résistance (14) électrique, sensible à l'étirement et appliquée sur un support (15, 31, 36) à base de matériau support polymère et des électrodes de raccordement (17) pour faire contact avec la bande de résistance (14), **caractérisé en ce que** le support (15, 31, 36) de l'agencement de rangée ou de surface (30, 35) est percé par un agencement de fente, des points de liaison (33, 37) se formant ainsi étant présents, par lesquels les supports (15, 31, 36) de jauges de contrainte (13) voisines sont reliés les uns aux autres et **en ce qu'**une couche multicouche (16) est appliquée comme couche de protection sur l'agencement de rangée ou de surface (30, 35) doté d'un agencement de fente, de jauge de contrainte, couche dont des couches individuelles ont été générées au cours de l'application sur la base respective par des procédés de revêtement adhésif.

2. Agencement de rangée ou de surface selon la revendication 1, **caractérisé en ce que** l'agencement de fente est constitué de fentes (32, 34) s'étendant le long des côtés d'une jauge de contrainte (13), chaque fente (32, 34) s'étendant sur pratiquement l'ensemble de la longueur de côté correspondante d'une jauge de contrainte (13).

3. Agencement de rangée ou de surface selon la revendication 1 ou 2, **caractérisé en ce que**, en particulier dans le cas d'un agencement de surface de jauge de contrainte (13) dans les zones entre les bandes de résistance (14) individuelles, reliées à leurs électrodes de raccordement (17) respectives, des fentes (32) et des fentes (34) disposées perpendiculairement aux premières percent le support (36), quatre points de liaison (37) étant présents à chaque fois sur les angles des différentes jauges de contrainte (13).

4. Agencement de rangée ou de surface selon la revendication 1 ou 2, **caractérisé en ce que**, en particulier dans le cas d'un agencement de surface de jauge de contrainte (13), des fentes formant un angle droit s'étendent en partie autour des bandes de résistance (14) reliées à leurs électrodes de raccordement (17) respectives et ne sont plus associées les unes aux autres que sur deux ou trois points de liaison de support (36).

5. Agencement de rangée ou de surface selon l'une des revendications 1 à 4, **caractérisé en ce que** la couche multicouche (16) se compose d'une succession alternante d'une couche polymère (19', 19", 19"') et d'une couche barrière (20), la couche multicouche (16) étant formée d'au moins trois couches individuelles minces.

6. Agencement de rangée ou de surface selon la revendication 5, **caractérisé en ce qu'**une couche polymère (19') forme la couche limite de la couche multicouche (16) par rapport au support (15) et/ou à la bande de résistance (14), laquelle couche polymère (19') aplanit la surface de la zone à revêtir en ce qui concerne les rugosités et recouvre des arêtes et surfaces agencées perpendiculairement au plan de couche.

7. Agencement de rangée ou de surface selon la revendication 5 ou 6, **caractérisé en ce qu'**une couche polymère (19"') forme la couche limite de la couche multicouche (16) par rapport à l'atmosphère ambiante.

8. Procédé destiné à générer une couche de protection sur un agencement de rangée ou de surface (30, 35) de jauge de contrainte (13), lesquelles jauges de contrainte (13) présentent une bande de résistance (14) électrique, sensible à l'étirement et appliquée sur un support (15) à base d'un matériau support polymère et des électrodes de raccordement (17) pour faire contact avec la bande de résistance (14), **caractérisé en ce que**, avant l'opération de revêtement, le support (31, 36) de l'agencement de rangée ou de surface (30, 35) est percé par un agencement de fente entourant chaque jauge de contrainte (13) individuelle, des points de liaison (33, 37) se formant, par lesquels les supports (15) de jauges de contrainte (13) voisines sont reliés les uns aux autres et une couche multicouche (16) étant appliquée en tant que couche de protection sur l'agencement de rangée ou de surface (30, 35) doté d'un agencement de fente, de jauge de contrainte, couche dont des couches individuelles sont générées au cours de l'application sur base respective par des procédés de revêtement adhésif.

9. Procédé selon la revendication 8, **caractérisé en ce qu'**un agencement de fente constitué de fentes (32, 34) s'étendant le long des côtés d'une jauge de contrainte (13) est généré, chaque fente (32, 34) s'étendant sur pratiquement l'ensemble de la longueur de côté correspondante d'une jauge de contrainte.

10. Procédé selon la revendication 8 ou 9, **caractérisé en ce que** l'agencement de fente est généré par découpage à l'eau, découpe au laser ou découpage de matériau dans le support (31, 36).

11. Procédé selon l'une des revendications 8 à 10, **caractérisé en ce qu'**une couche polymère (19') aplanissante et recouvrant des arêtes et des surfaces agencées perpendiculairement au plan de couche est appliquée sur au moins une partie support (15) et/ou de la bande de résistance (14) et/ou des électrodes de raccordement (17), une couche de barrière (20) mince est précipitée sur la couche polymère (19'), laquelle couche de barrière (20) est suivie d'une autre couche polymère (19", 19"') mince, et **en ce que** l'opération du revêtement avec une succession alternante d'une couche barrière (20) mince et d'une couche polymère (19") mince est répétée de façon quelconque, une couche polymère (19"') ou une couche barrière (20) mince pouvant être présente comme couche limite par rapport à l'atmosphère ambiante.

12. Procédé selon l'une des revendications 8 à 11, **caractérisé en ce que** la fabrication de la couche multicouche (16) s'effectue par revêtement alternatif avec des couches polymères (19' 19", 19"') et des couches barrières (20) à l'intérieur d'un appareillage de revêtement au moyen d'au moins deux sources en une opération.

13. Procédé selon l'une des revendications 8 à 12, **caractérisé en ce que** le support de la couche multicouche (16) est soumise avant l'opération de revêtement à un nettoyage au plasma ou un nettoyage chimique.
